# FASCICULE DE BREVET EUROPEEN

(11) **EP 1 483 733 B1**
(45) Date de publication et mention de la délivrance du brevet: **18.05.2016**
(21) Numéro de dépôt: 03729504.5
(22) Date de dépôt: 13.01.2003
(51) Int. Cl.: G06K 19/077, G06K 7/08, G06K 19/07

(54) **ECHANGÉ PAR COUPLAGE INDUCTIF DANS UN OBJET PORTABLE INTELLIGENT À CIRCUITS CENTRAL ET PÉRIPHÈRIQUE**
INDUKTIVER KOPPELAUSTAUSCH IN EINEM PORTIERBAREN INTELLIGENTEN OBJEKT MIT ZENTRALEN UND PERIPHEREN SCHALTUNGEN
INDUCTIVE COUPLING EXCHANGE IN A PORTABLE INTELLIGENT OBJECT WITH CENTRAL AND PERIPHERAL CIRCUITS

(30) Priorité: 16.01.2002 FR 0200504
(43) Date de publication de la demande: 08.12.2004
(73) Titulaire: Gemalto SA, 92190 Meudon (FR)
(72) Inventeur: CARUANA, Jean-Paul, Les Jardins de Toscane Bât E1, F-13009 MARSEILLE (FR)
(74) Mandataire: Milharo, Emilien
(86) Numéro de dépôt international: PCT/FR2003/000084
(87) Numéro de publication internationale: WO 2003/060820

(56) Documents cités:
- EP-A- 0 057 602
- EP-A1- 0 262 036
- CA-A1- 2 204 455
- DE-A- 4 138 131
- DE-A- 19 604 206
- DE-U1- 20 110 585
- US-A- 4 874 934
- US-A- 5 537 126
- US-A- 5 892 441
- US-A- 6 073 855

## Description

Le domaine de l'invention est celui des objets portables intelligents tels que carte à puce ou transpondeur, et plus particulièrement des échanges de données par couplage inductif au sein d'un tel objet.

Elle trouve application notamment dans le contrôle d'accès, l'identification, le traitement de données (affichage, saisie) par un objet portable intelligent tel que carte à puce, étiquette électronique ou analogues.

Le document EP-0 262 036 A1 décrit une carte à contacts comportant au moins deux modules à contacts électriques dans lequel des fonctions de la carte sont réparties. La carte coopère avec un lecteur ayant deux connecteurs et deux interfaces de lecture /écriture à contacts pour communiquer avec les deux modules à tour de rôle et mettre en oeuvre ces fonctions réparties et notamment échanger entre les deux modules par l'intermédiaire du lecteur.

Le document EP0057602 décrit un dispositif portable intelligent pour le payement de services. Ce dispositif comporte une puce de circuit intégrée, via un bus regroupant des fils conducteurs, à d'autres composants du dispositif dont une antenne, un écran d'affichage et un clavier de saisie. Ce document ne prévoit pas que les composants internes communiquent exclusivement via une liaison sans contact avec une station externe.

Le document DE 201 10 585 U1 décrit un objet portable comprenant deux circuits sans-contact reliés chacun à une antenne distincte ou sur une même antenne. Chaque puce "Legic" et "mifare" de la carte sans-contact est destinée à être lue séparément par un type de lecteur. Il faut donc deux lecteurs de types différents pour lire les deux puces.

Le document US5537126 décrit un système de visualisation d'information sur un lieu de vente, à l'aide d'étiquettes de visualisation électronique. Les étiquettes sont en couplage électromagnétique avec un conducteur. Un circuit de commande est utilisé pour produire un signal d'information qui contient l'adresse de l'étiquette et des données. Un circuit modulateur transforme un courant alternatif en signal d'information et l'applique au conducteur pour sa transmission aux étiquettes d'affichage. Chacune des étiquettes est équipée d'une bobine électromagnétique couplée au conducteur. Chacune des étiquettes d'affichage est équipée d'un commutateur manuel d'initialisation. Un microprocesseur est aussi prévu dans l'étiquette de même qu'une mémoire interne.

Le document DE4138131 décrit une carte à puce avec des microprocesseur, écran d'affichage et mémoire intégrée alimentée par une capteur solaire. La communication entre la carte et une unité externe en lecture / écriture, est sans contact par exemple par transmission optique, capacitive ou inductive. Le microprocesseur, la mémoire, l'affichage et le capteur d'énergie solaire sont physiquement reliés à l'intérieur de la carte par des conducteurs.

Le document DE19604206 décrit un objet portable intelligent de transmission de données sécurisées. Ce objet portable intelligent possède un corps de carte en matière plastique, au format d'une carte de crédit. Dans une partie de la carte est logé un clavier, avec les touches de fonction. Sous le clavier des conducteurs galvaniques relient des rangées et des colonnes ensemble en matrice à une unité de commande. L'objet portable intelligent est également équipé d'une antenne, noyée dans le corps.

Le document US4874934 décrit une carte à puce qui se compose d'une unité centrale de traitement, de mémoires de données et pour les programmes, ainsi que d'un pilote d'affichage constitué par une puce. Les composants de la carte sont connectés physiquement.

On connaît donc des objets portables intelligents sans contact comprenant une interface de communication sans contact apte à émettre et/ou recevoir des données par couplage inductif avec une station. Généralement, l'interface de communication sans contact comporte une bobine d'antenne connectée à un condensateur, un circuit intégré tel qu'une puce ou un autre composant. Des objets portables intelligents sans contact possèdent un circuit périphérique tel qu'afficheur et une puce connectée à ce circuit périphérique. La puce opère des fonctionnalités d'identification et/ou d'authentification, dites "centrale" ou "principale" par rapport à la fonction dite "périphérique" de visualisation de l'afficheur.

Ces périphériques par exemple les afficheurs ont l'inconvénient d'avoir des caractéristiques en terme de tension et courant de fonctionnement qui ne sont pas aisées à rendre compatibles avec celles des puces. De plus, la mise en oeuvre des connexions entre la puce et le périphérique nuit au coût de production des objets portables intelligents.

L'invention vise à remédier ces inconvénients, et est définie dans les revendications.

Grâce à l'invention, les données échangées entre le circuit périphérique et le circuit central transitent toutes via la station, ce qui permet de supprimer la connexion entre le circuit périphérique et le circuit central. Il en résulte une mise en place simple et peu onéreuse du circuit périphérique.

D'autres caractéristiques et avantages de l'invention apparaîtront dans la description d'exemples qui suit.
La figure 1 est une vue schématique d'un transpondeur à deux interfaces de communication sans contact selon l'invention ;
La figure 2 illustre schématiquement un objet portable intelligent selon l'invention, apte à communiquer sans contact et équipé d'un afficheur; et
La figure 3 illustre schématiquement un objet portable intelligent sans contact équipé d'un circuit intégré formant puce, d'un circuit sans contact formant afficheur et d'un circuit intégré sans contact formant clavier selon l'invention.

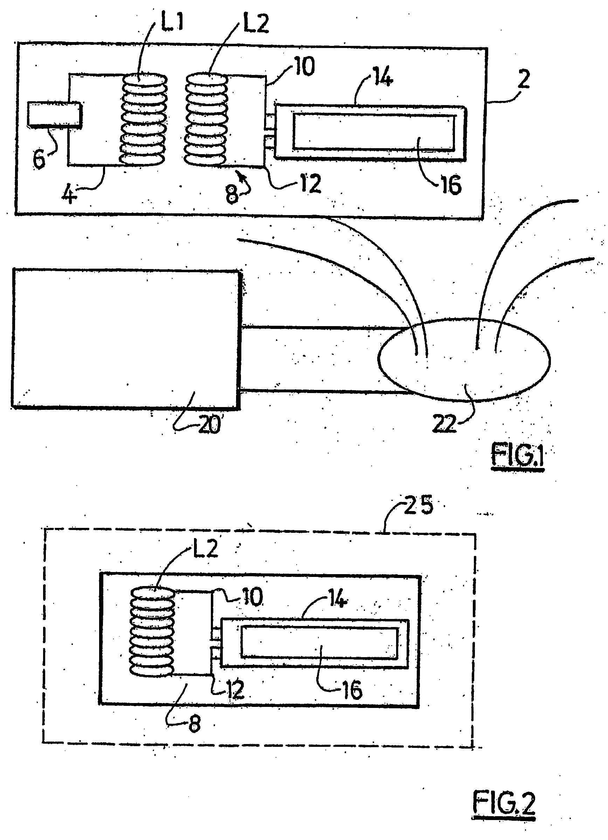

Sur la figure 1, un objet portable intelligent 2 comprend une interface de communication sans contact 4 qui comporte une bobine d'antenne L1 reliée à un circuit intégré 6 dit puce. Cette puce 6 opère des fonctionnalités d'identification et/ou d'authentification, dites "centrale" ou "principale".

Par objet portable intelligent, il faut entendre ici tout appareil ou dispositif apte à opérer une détection ou une communication à l'aide d'un champ électromagnétique. Il s'agit par exemple de cartes à puces, d'étiquettes électroniques ou analogues.

Cet objet portable intelligent 2 comprend une autre interface de communication sans contact 8 qui comporte une autre bobine d'antenne L2.

Deux plots 10 et 12 de la bobine d'antenne L2 sont connectés à un circuit intégré 14 réalisant une fonction périphérique. On parle donc de périphérique 14. Ce périphérique 14 est sur les figures, un périphérique d'affichage. Dans d'autres réalisations, le périphérique 14 est un clavier, un capteur par exemple bio métrique, une diode électroluminescente ou analogues.

Ce périphérique 14 opère des fonctionnalités dites "périphérique" ici de visualisation, par rapport aux fonctionnalités d'identification et/ou d'authentification, dites "centrale" ou "principale" de la puce 6.

L'objet portable intelligent 2 selon l'invention est apte à communiquer sans contact ou à distance avec un lecteur ou station 20 comprenant une antenne 22.

La station 20 est ici un dispositif émetteur/récepteur muni d'une antenne qui crée un champ électromagnétique à une fréquence donnée.

L'antenne 22 du dispositif formant station 20 permet de moduler le champ électromagnétique et de mesurer des variations de ce champ. À cette fin, l'antenne 22 de la station 20 comporte en générale une ou plusieurs bobines. Le couplage inductif entre l'objet 2 et la station 20 est réalisé lorsque cet objet 2 est à une distance donnée, dite "proximité" de la station 20. Selon les objets 2 et stations 20, cette distance est de l'ordre de quelques millimètres à quelques mètres.

Le circuit 14 comprend ici une zone d'affichage 16. Ce circuit 14 est ici apte à être alimenté par le courant induit dans la bobine L2 lorsque la bobine L2 est en couplage inductif avec l'antenne 22 de la station 20. Le circuit 14 est également apte à extraire de ce courant induit, des informations destinées à être affichées.

En pratique, le courant induit provient d'un champ électromagnétique émis par la station 20, par exemple un lecteur de badge ou un lecteur de carte à puce. Sur la figure 2, l'objet portable intelligent 2 est une carte à puce au format ISO7816 sans contact ou mixte c'est-à-dire avec une interface à contacts et une interface sans contact.

Dans ce dernier cas, la carte mixte coopère avec un lecteur (non représenté) ayant une interface de communication à contact ainsi qu'une interface de communication sans contact.

Sur les figures 1 ou 2, des tensions importantes aux bornes de l'antenne L2 sont obtenues dans tout le spectre de fonctionnement de l'objet 2. Ainsi, des tensions élevées étant nécessaires pour des afficheurs notamment à écran rémanent, l'invention est apte à intégrer de tels périphériques 14.

En pratique, les circuits résonants formés par la première interface de communication 4 et la seconde interface de communication 8 sont choisis de sorte qu'ils soient accordés à des fréquences voisines l'une de l'autre, et que la fréquence résultant du couplage des deux bobines L1 et L2 soit adaptée à la fréquence requise par la station 20.

Le périphérique 14 est selon les exemples, un afficheur sans contact ou un afficheur standard du commerce doté d'un dispositif de contrôle (driver) à protocole d'échange de données par une liaison en série. Dans ce dernier cas, un circuit d'adaptation est utilisé pour réaliser à partir du courant induit dans la bobine L2 l'ensemble des signaux nécessaires au fonctionnement de ce périphérique 14.

Selon un autre exemple de l'invention, le périphérique 14 assure une fonction de clavier de saisie. Ce périphérique 14 formant clavier est également du type sans contact. Ce périphérique 14 est apte à dialoguer avec le lecteur 20 sans contact via un champ électromagnétique au même titre que la puce 6 ou l'afficheur évoqués plus haut, et suivant le même principe, à savoir une modulation du champ électromagnétique.

Un tel périphérique 14 formant clavier sans contact permet notamment de supprimer des claviers sur les terminaux tels que la station 20. Ainsi, ce périphérique 14 participe à la réduction de coûts du système et surtout à l'augmentation de la sécurité des stations 20 ; en effet le clavier d'une station 20 qui présente une interface directe avec le monde extérieur, est un point d'entrée privilégié pour les attaques extérieures.

De plus, le périphérique 14 sans contact étant pourvu en courant électrique, c'est-à-dire " auto alimenté " par le courant induit, la saisie d'un code secret est plus difficile à espionner que celle qui est effectuée sur un clavier de station 20.

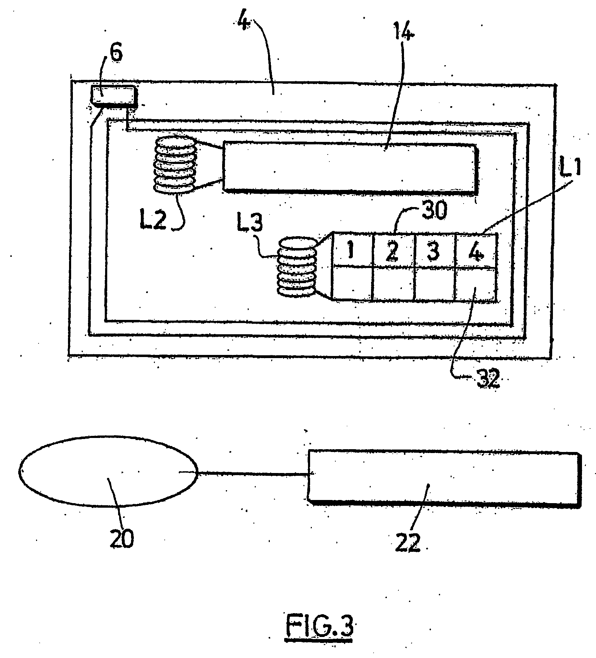

Dans un exemple, l'objet portable intelligent 2 comporte plusieurs périphériques, tels qu'un clavier sans contact et un afficheur. Ainsi, sur la figure 3, deux circuits périphériques sans contact sont intégrés à l'objet portable intelligent 2, l'un formant afficheur 14, l'autre formant clavier 30. Ce circuit formant clavier sans contact 30 comprend plusieurs touches 32. Ce clavier 30 possède un circuit résonant apte à envoyer vers le lecteur ou station 20 des informations correspondantes à la touche 32 enfoncée par l'utilisateur.

De même, une diode électroluminescente sans contact (non représentée) associée à un autre circuit résonnant permet par une visualisation, de confirmer que l'ensemble des circuits périphériques sans contact dans l'objet portable intelligent 2 est alimenté par le champ électromagnétique.

Dans un mode de réalisation, la station 20 échange des données avec le circuit intégré formant puce 6 par l'intermédiaire d'une modulation d'amplitude, selon un protocole conforme à une norme en vigueur, par exemple la norme ISO14443.

Les échanges avec les circuits formant clavier sans contact 30, afficheur sans contact 14, diode électroluminescente sans contact s'effectuent en utilisant une modulation d'amplitude présentant des caractéristiques différentes de celles de la modulation entre la puce 6 et le lecteur 20 de façon à permettre la sélection par le lecteur de l'élément périphérique sans contact visé.

Par exemple, dans le cadre d'un échange unilatéral avec l'afficheur sans contact 14, cet afficheur 14 nécessite uniquement la réception de données. Dans ce cas, il est prévu de moduler la bobine d'antenne L2 selon un débit plus faible que celui effectué avec le circuit intégré 6 et la bobine d'antenne associée L1.

Ainsi, dans le cas d'une modulation de type ISO 14443 correspondant à un échange de données entre la puce 6 et la station 20 à un débit de 106 kilo bits par seconde avec un taux de modulation d'amplitude de 100% et des temps de pause de 3 micro-secondes, il est prévu d'utiliser des échanges avec l'afficheur 14 avec un taux de modulation des données plus faible, par exemple de l'ordre de 10% et un débit inférieur à 26 kilo bits par seconde.

De cette manière, les échanges de données vers la puce 6 sont exclusivement compris de la puce seule. similairement, les échanges vers l'afficheur 14 ne sont compris que par l'afficheur 14.

En ce qui concerne les échanges unilatéraux du clavier sans contact 30 vers le lecteur 20, il est possible d'utiliser un débit similaire afin d'être discriminé des autres éléments périphériques sans contact.

Par exemple, en pressant ou en exerçant une pression sur une touche 32, il est possible de déclencher un générateur d'impulsion de basse fréquence par exemple de quelques kHz et le nombre de ces impulsions correspond au code touche appuyée.

Le lecteur 20 détecte alors ces impulsions qui modulent la bobine d'antenne 22 du lecteur 20.

Le lecteur 20 en déduit les impulsions ainsi déclenchées.

D'autres modes de sélection plus sophistiqués peuvent être utilisés afin de mettre en oeuvre la sélection de l'élément périphérique sans contact. Par exemple des mécanismes de sélection par anticollision peuvent être utilisés, tels que les systèmes anticollision par sélection de numéros de séries.

Grâce à l'invention, il est possible d'utiliser un protocole selon lequel les communications entre l'objet portable intelligent 2 et la station 20 s'effectuent via la station, de manière à ce que si une donnée doit être affichée, elle doit être envoyée par la station 20 vers l'afficheur 14 par l'intermédiaire du champ électromagnétique.

Il en est de même pour la puce 6 qui pour afficher une information la renvoie tout d'abord à la station 20 qui est ensuite en charge de la renvoyer à l'afficheur 14.

Ainsi, toutes les données émises ou reçues par l'élément périphérique sans contact transitent via la station.

L'avantage d'un tel protocole permet de doter les objets portables intelligents d'au moins un élément périphérique sans contact qui ne nécessite aucune connexion filaire entre l'unité de traitement central de l'objet portable intelligent et l'élément périphérique sans contact.

## Revendications

1. Objet portable intelligent (2) équipé d'un circuit central de traitement de données (6) et d'au moins un circuit périphérique (14, 30), leditt circuit périphérique comprenant une première interface de communication sans-contact (8),
- ledit circuit central, dépourvu de connexion filaire avec le circuit périphérique, est pourvu d'une seconde interface de communication sans-contact (4) pour communiquer avec une station externe (20).
**caractérisé en ce que** ledit circuit périphérique est agencé de manière à échanger en sans-contact avec ladite station externe (20), un protocole de communication faisant transiter via la station tous les échanges de données entre le circuit central et le circuit périphérique.

2. Objet portable (2) selon l'une quelconque des revendications précédentes, **caractérisé en ce que** le circuit périphérique appartient au groupe formé par les circuits intégrés formant afficheur (14), clavier (30), mémoire, diode électroluminescente ou analogue.

3. Objet portable (2) selon l'une quelconque des revendications précédentes, **caractérisé en ce que** le circuit central (6) appartient au groupe formé par les circuits intégrés formant unité de traitement, mémoire ou analogue.

4. Objet portable (2) selon l'une quelconque des revendications précédentes, **caractérisé en ce qu'**il comprend plusieurs premières interfaces de communication sans-contact (8) reliées chacune à un circuit périphérique respectif (14, 30).

5. Objet portable (2) selon l'une quelconque des revendications précédentes, **caractérisé en ce que** la seconde interface de communication (4) est du type sans-contact apte à émettre et/ou recevoir des données par couplage inductif avec la station (20).

6. Objet portable (2) selon l'une quelconque des revendications précédentes, **caractérisé en ce que** la seconde Interface de communication (4) comprend une interface à contacts.

7. Procédé de communication entre un circuit central de traitement de données (6) et au moins un circuit périphérique (14,30) du circuit central, le circuit central et le circuit périphérique équipant un objet portable intelligent (2), selon lequel :
- ledit circuit périphérique est pourvu d'une première interface de communication sans-contact (8),
- ledit circuit central, dépourvu de connexion filaire avec le circuit périphérique, est pourvu d'une seconde interface de communication sans-contact (4) pour communiquer avec une station externe (20)
**caractérisé en ce que** ledit circuit périphérique est agencé de manière à échanger en sans-contact avec ladite station externe (20), un protocole de communication faisant transiter tous les échanges de données entre le circuit central et le circuit périphérique via la station externe.

8. Procédé selon la revendication 7, dans lequel la transmission de données est dans le sens circuit central vers circuit périphérique, **caractérisé en ce qu'**il est prévu de moduler la charge de la première interface de communication (8) selon une modulation choisie, différente de celle de la seconde interface de communication (4).

9. Procédé selon la revendication 8, **caractérisé en ce que** la modulation de la charge de la première interface de communication (8) est une modulation d'amplitude avec un taux de modulation des données de l'ordre de 10% tandis que la modulation de la charge de la seconde interface de communication (4) est une modulation d'amplitude avec un taux de modulation des données de l'ordre de 100%.

10. Procédé selon l'une quelconque des revendications 7 à 9, dans lequel la transmission des données est dans le sens circuit périphérique vers circuit central, **caractérisé en ce qu'**il est prévu de moduler la charge de la station (20) selon une modulation choisie pour transmettre des données du circuit périphérique (14, 30) vers le circuit central via la station (20).

11. Procédé selon l'une quelconque des revendications 7 à 10, **caractérisé en ce que** les données sont échangées entre le circuit périphérique et le circuit central et réciproquement via la station.

12. Procédé selon l'une des revendications 7 à 11, **caractérisé en ce qu'**il est prévu d'équiper l'objet portable intelligent (2) de plusieurs circuits périphériques reliés chacun à une première interface de communication sans contact (14, 30), et **en ce que** toutes les données échangées entre le circuit central et chaque circuit périphérique (14, 30) transitent via la station sans-contact (20).

13. Système de communication entre un circuit central de traitement de données (6) et au moins un circuit périphérique (14,30) du circuit central, le circuit central et le circuit périphérique équipant un objet portable intelligent (2), selon lequel :
- ledit circuit périphérique est pourvu d'une première interface de communication sans-contact (8).
- ledit circuit central, dépourvu de connexion filaire avec le circuit périphérique, est pourvu d'une seconde interface de communication sans-contact (4) pour communiquer avec une station externe (20)
**caractérisé en ce que** ledit circuit périphérique est agencé de manière à échanger en sans-contact avec ladite station externe (20), un protocole de communication faisant transiter tous les échanges de données entre le circult central et le circuit périphérique via la station externe.

## Patentansprüche

1. Tragbarer intelligenter Gegenstand (2), ausgestattet mit einem zentralen Datenverarbeitungsschaltkreis (6) und mindestens einem peripheren Schaltkreis (14, 30),
- wobei besagter peripherer Schaltkreis eine erste kontaktlose Kommunikationsschnittstelle (8) umfasst,
- und besagter zentraler Schaltkreis ohne drahtgebundene Verbindung zum peripheren Schaltkreis mit einer zweiten kontaktlosen Kommunikationsschnittstelle (4) versehen ist, um mit einer externen Station (20) zu kommunizieren,
**dadurch gekennzeichnet, dass** besagter peripherer Schaltkreis so angeordnet ist, dass mit besagter externer Station (20) kontaktlos ein Kommunikationsprotokoll ausgetauscht werden kann, bei dem alle zwischen dem zentralen Schaltkreis und dem peripheren Schaltkreis ausgetauschten Daten über die Station übertragen werden.

2. Tragbarer Gegenstand (2) nach einem der vorhergehenden Ansprüche, **dadurch gekennzeichnet, dass** der periphere Schaltkreis zu einer Gruppe gehört, die sich aus integrierten Schaltkreisen zusammensetzt, welche die Anzeigevorrichtung (14), die Tastatur (30), den Speicher, die Leuchtdiode oder dergleichen bilden.

3. Tragbarer Gegenstand (2) nach einem der vorhergehenden Ansprüche, **dadurch gekennzeichnet, dass** der zentrale Schaltkreis (6) zu einer Gruppe gehört, die sich aus integrierten Schaltkreisen zusammensetzt, welche die Zentraleinheit, den Speicher oder ähnliches bilden

4. Tragbarer Gegenstand (2) nach einem der vorhergehenden Ansprüche, **dadurch gekennzeichnet, dass** er mehrere erste kontaktlose Kommunikationsschnittstellen (8) umfasst, die jeweils an einen peripheren Schaltkreis (14, 30) angeschlossen sind.

5. Tragbarer Gegenstand (2) nach einem der vorhergehenden Ansprüche, **dadurch gekennzeichnet, dass** die zweite Kommunikationsschnittstelle (4) kontaktlos ist und über induktive Kopplung mit der Station (20) Daten senden und/oder erhalten kann.

6. Tragbarer Gegenstand (2) nach einem der vorhergehenden Ansprüche, **dadurch gekennzeichnet, dass** die zweite Kommunikationsschnittstelle (4) eine kontaktbehaftete Schnittstelle umfasst.

7. Verfahren zur Kommunikation zwischen einem zentralen Datenverarbeitungsschaltkreis (6) und mindestens einem peripheren Schaltkreis (14, 30) des zentralen Schaltkreises, wobei der zentrale Schaltkreis und der periphere Schaltkreis an einem tragbaren, intelligenten Gegenstand (2) installiert sind, demzufolge:
- besagter peripherer Schaltkreis mit einer ersten kontaktlosen Kommunikationsschnittfläche (8) versehen ist,
- besagter zentraler Schaltkreis ohne Drahtverbindung zum peripheren Schaltkreis mit einer zweiten kontaktlosen Kommunikationsschnittfläche (4) versehen ist, um mit einer externen Station (20) zu kommunizieren,
**dadurch gekennzeichnet, dass** besagter peripherer Schaltkreis so angeordnet ist, dass mit besagter externer Station (20) kontaktlos ein Kommunikationsprotokoll ausgetauscht werden kann, bei dem alle zwischen dem zentralen und dem peripheren Schaltkreis ausgetauschten Daten über die externe Station übertragen werden.

8. Verfahren nach Anspruch 7, in dem die Datenübertragung vom zentralen Schaltkreis aus zum peripheren Schaltkreis hin erfolgt, **dadurch gekennzeichnet, dass** die Last der ersten Kommunikationsschnittstelle (8) nach einer ausgewählten Modulationsart, die nicht mit jener der zweiten Kommunikationsschnittstelle (4) übereinstimmt, moduliert wird.

9. Verfahren nach Anspruch 8, **dadurch gekennzeichnet, dass** es sich bei der Modulation der Last der ersten Kommunikationsschnittstelle (8) um eine Amplitudenmodulation mit einem Datenmodulationsanteil von 10% handelt, wohingegen es sich bei der Modulation der Last der zweiten Kommunikationsschnittstelle (4) um eine Amplitudenmodulation mit einem Datenmodulationsanteil von 100% handelt.

10. Verfahren nach einem der Ansprüche 7 bis 9, in dem die Datenübertragung vom peripheren Schaltkreis zum zentralen Schaltkreis hin erfolgt, **dadurch gekennzeichnet, dass** die Last der Station (20) nach einer Modulationsart moduliert werden soll, welche die Daten des peripheren Schaltkreises (14, 30) über die Station (20) zum zentralen Schaltkreis überträgt.

11. Verfahren nach einem der Ansprüche 7 bis 10, **dadurch gekennzeichnet, dass** die Daten zwischen dem peripheren Schaltkreis und dem zentralen Schaltkreis in beiden Richtungen über die Station ausgetauscht werden.

12. Verfahren nach einem der Ansprüche 7 bis 11, **dadurch gekennzeichnet, dass** der intelligente, tragbare Gegenstand (2) mit mehreren peripheren Schaltkreisen, die jeweils an einer ersten kontaktlosen Kommunikationsschnittstelle (14, 30) angeschlossen sind, ausgestattet ist, und dadurch, dass alle zwischen dem zentralen Schaltkreis und jedem peripheren Schaltkreis (14, 30) ausgetauschten Daten über die kontaktfreie Station (20) übertragen werden.

13. System zur Kommunikation zwischen einem zentralen Datenverarbeitungsschaltkreis (6) und mindestens einem peripheren Schaltkreis (14, 30) des zentralen Schaltkreises, wobei der zentrale Schaltkreis und der periphere Schaltkreis an einem tragbaren, intelligenten Gegenstand (2) installiert sind, dem zufolge:
- besagter peripherer Schaltkreis eine erste kontaktlose Kommunikationsschnittstelle (8) umfasst,
- besagter zentraler Schaltkreis ohne drahtgebundene Verbindung zum peripheren Schaltkreis mit einer zweiten kontaktlosen Kommunikationsschnittstelle (4) versehen ist, um mit einer externen Station (20) zu kommunizieren,
**dadurch gekennzeichnet, dass** besagter peripherer Schaltkreis so angeordnet ist, dass mit besagter externer Station (20) kontaktlos ein Kommunikationsprotokoll ausgetauscht werden kann, bei dem alle zwischen dem zentralen Schaltkreis und dem peripheren Schaltkreis ausgetauschten Daten über die Station übertragen werden.

## Claims

1. A portable intelligent object (2) provided with a central data processing circuit (6) and at least one peripheral circuit (14, 30), with said peripheral circuit comprising a first contactless communication interface (8),
- said central circuit, having no wire connection with the peripheral circuit, is provided with a second contactless communication interface (4) for communicating with an external station (20)
**characterized in that** said peripheral circuit is so arranged as to have contactless exchanges with said external station (20), with a communication protocol transmitting all the data exchanges between the central circuit and the peripheral circuit through the station.

2. A portable object (2) according to any one of the preceding claims, **characterized in that** the peripheral circuit belongs to the group formed by the integrated circuits forming a display device (14), a keyboard (30), a memory, an electroluminescent diode or the like.

3. A portable object (2) according to any one of the preceding claims, **characterized in that** the central circuit (6) belongs to the group formed by the integrated circuits forming a processing unit, a memory or the like.

4. A portable object (2) according to any one of the preceding claims, **characterized in that** it comprises several first contactless communication interfaces (8), each connected to a respective peripheral circuit (14, 30).

5. A portable object (2) according to any one of the preceding claims, **characterized in that** the second communication interface (4) is of the contactless type capable of transmitting and/or receiving data by inductive coupling with the station (20).

6. A portable object (2) according to any one of the preceding claims, **characterized in that** the second communication interface (4) comprises a contact interface.

7. A method for establishing communications between a central data processing circuit (6) and at least one peripheral circuit (14, 30) of the central circuit, with an intelligent portable object (2) being provided with the central circuit and the peripheral circuit, wherein
- said peripheral circuit is provided with a first contactless communication interface (8),
- said central circuit, having no wire connection with the peripheral circuit, is provided with a second contactless communication interface (4), to communicate with an external station (20),
**characterized in that** said peripheral circuit is so arranged as to exchange, with no contact with said external station (20), with a communication protocol transmitting all the data exchanges between the central circuit and the peripheral circuit through the external station.

8. A method according to claim 7, wherein the transmission of data is executed in the central circuit to peripheral circuit direction, **characterized in that** it is provided to modulate the load of the first communication interface (8) according to a chosen modulation, which is different from that of the second communication interface (4).

9. A method according to claim 8, **characterized in that** the modulation of the load of the first communication interface (8) is an amplitude modulation with a data modulation rate of the order of 10% whereas the modulation of the load of the second communication interface (4) is an amplitude modulation with a data modulation rate of the order of 100%.

10. A method according to any one of claims 7 to 9, wherein the transmission of data is executed in the peripheral circuit to the central circuit direction, **characterized in that** it is provided to modulate the station (20) load according to a chosen modulation to send data from the peripheral circuit (14, 30) to the central system through the station (20).

11. A method according to any one of claims 7 to 10, **characterized in that** data is exchanged between the peripheral circuit and the central circuit and vice versa via the station.

12. A method according to one of claims 7 to 11, **characterized in that** it is provided to equip the portable intelligent object (2) with several peripheral circuits, each connected to a first contactless communication interface (14, 30), and **in that** all the data exchanged between the central circuit and each peripheral circuit (14, 30) are sent through the contactless station (20).

13. A system for establishing communications between a central data processing circuit (6) and at least one peripheral circuit (14, 30) of the central circuit, with an intelligent portable object (2) being provided with the central circuit and the peripheral circuit, wherein
- said peripheral circuit is provided with a first contactless communication interface (8),
- said central circuit, having no wire connection with the peripheral circuit, is provided with a second contactless communication interface (4) for communicating with an external station (20)
**characterized in that** said peripheral circuit is so arranged as to have contactless exchanges with said external station (20), with a communication protocol transmitting all the data exchanges between the central circuit and the peripheral circuit through the station.
